(19) Europäisches Patentamt
European Patent Office
Office européen des brevets

(11) **EP 4 722 837 A1**

(12) **EUROPEAN PATENT APPLICATION**
published in accordance with Art. 153(4) EPC

(43) Date of publication:
08.04.2026 Bulletin 2026/15

(21) Application number: 24813785.3

(22) Date of filing: 06.03.2024

(51) International Patent Classification (IPC):
*G05D 1/00* (2024.01)  *G06V 20/17* (2022.01)
*G06V 10/46* (2022.01)  *G06V 10/75* (2022.01)

(52) Cooperative Patent Classification (CPC):
Y02T 10/40

(86) International application number:
PCT/CN2024/080202

(87) International publication number:
WO 2024/244579 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 CN 202310617730

(71) Applicant: Riamb (Beijing) Technology
Development Co., Ltd.
Beijing 100120 (CN)

(72) Inventors:
• WANG, Yong
  Beijing 100120 (CN)
• LI, Yan
  Beijing 100120 (CN)
• MA, Aiyi
  Beijing 100120 (CN)
• ZHENG, Gang
  Beijing 100120 (CN)
• JIANG, He
  Beijing 100120 (CN)

(74) Representative: Vesterinen, Jussi Tapio
LUMI IP GmbH
Rodtmattstrasse 45
3014 Bern (CH)

(54) **DIGITAL TWIN-BASED ROTOR UNMANNED AERIAL VEHICLE INVENTORY COUNTING METHOD AND APPARATUS, AND STORAGE MEDIUM**

(57) A rotary-wing UAV stocktaking method and apparatus based on the digital twin, and a storage medium are provided, which are applied to the technical field of logistics & warehousing. By building a digital twin model of a logistics warehouse, warehouse-in and warehouse-out tasks are synchronized in the digital twin model, to implement virtuality-reality synchronization of goods. Meanwhile, virtual and actual UAVs are controlled to move forward according to a planned path. Cameras are used to take photos of goods on shelf grids for virtuality and reality comparison, thereby determining the accuracy of the goods on the shelf grids. In addition, in the cruising process of the UAVs, coordinate offsets of the virtual and actual UAVs are determined by an epipolar geometry algorithm, so that the position of an actual UAV is calibrated in actual time based on the position of a virtual UAV, which can avoid gradual deviation of the actual UAV from the original planned path due to external interference and improve instantaneity of a path of a UAV. Human participation is not required; the quantity of sensors involved is small, so energy consumption is low; and photos are taken independently for each shelf so that the photos have high clarity.

Build a digital twin model of a logistics warehouse, wherein the digital twin model of the logistics warehouse includes a virtual logistics warehouse, a virtual unmanned aerial vehicle, a virtual shelf, and virtual goods — S1

Synchronize warehouse-in and warehouse-out tasks into the digital twin model of the logistics warehouse, and synchronously update the virtual goods on the virtual shelf according to the warehouse-in and warehouse-out tasks — S2

Determine a region that requires stocktaking, and generate an unmanned aerial vehicle cruising path according to a preset path generation rule in the region that requires stocktaking — S3

Enable a actual unmanned aerial vehicle and the virtual unmanned aerial vehicle to start cruising from an initial position of the unmanned aerial vehicle cruising path according to the unmanned aerial vehicle cruising path — S4

Enable the actual unmanned aerial vehicle to take a actual goods photo every time the actual unmanned aerial vehicle flies a distance of one shelf grid, enable the virtual unmanned aerial vehicle to take a virtual goods photo every time the virtual unmanned aerial vehicle flies a distance of one virtual shelf grid, perform similarity calculation according to the actual goods photo and the virtual goods photo, generate a stocktaking record according to a similarity calculation result, and calibrate a position of the actual unmanned aerial vehicle by using an epipolar geometry algorithm — S5

After the actual unmanned aerial vehicle and the virtual unmanned aerial vehicle have completed cruising along the unmanned aerial vehicle cruising path, obtain stocktaking records of goods on all shelf grids in the region that requires stocktaking — S6

**FIG. 1**

**Description**

**TECHNICAL FIELD**

The present invention relates to the technical field of logistics & warehousing, and specifically to a digital twin-based rotary-wing unmanned aerial vehicle (UAV) inventory scanning method, apparatus, and storage medium.

**BACKGROUND**

An automated stereoscopic warehousing system is configured for the storage of goods. The correctness of a goods account is crucial for warehouse management. Due to a failure of equipment such as a stacking machine, people entering or leaving a warehouse, and other reasons, there is often a deviation between an account recorded in a system and an actual inventory. In this case, it is necessary to check the account of the warehouse goods through stocktaking, to confirm an actual stock quantity and correct an error.

At present, the main methods for automated c stocktaking include manual stocktaking, stacking machine video stocktaking, and the like.

There are two manual stocktaking methods: In one method, a worker sits on a goods platform of a stacking machine, and views information and verifies goods location information as the goods platform approaches goods. In the other method, a stacking machine picks up goods at a designated goods location and transports the goods to a warehouse-out station, and a worker verifies goods information next to the station.

The stacking machine video stocktaking method means: arranging an industrial camera on a goods platform of a stacking machine, traversing goods locations of an entire stereoscopic warehouse, taking photos or videos of goods, transmitting the photos or videos to a management system, and verifying, by a worker, inventory information with information presented in the actual photos, or comparing, by a worker, a stocktaking database with an inventory database, to complete a stocktaking operation. Patent No. 202110687757.2 discloses an intelligent stocktaking method and system for goods in an unmanned warehouse based on environmental perception. A stacking machine carrying a multi-lens panoramic camera for stocktaking. The stacking machine needs to traverse the entire stereoscopic warehouse to acquire video streams to form a stocktaking database.

Unmanned aerial vehicle (UAV) stocktaking method: Patent No. 202010213428. X discloses a radio frequency identification (RFID) warehouse logistics method and system based on a UAV. Patent No. 202210344350.4 discloses a UAV stocktaking system. Patent No. 202010513538.8 discloses an indoor warehouse self-stocktaking system and method based on a UAV.

Manual stocktaking method: In a first manual stocktaking method, a worker needs to sit on a goods platform to approach goods, and then perform operations such as verifying goods information after approaching the goods. It is very dangerous when the worker moves with the stacking machine between high-rise shelves. Furthermore, the first method has a high workload, low efficiency, and high labor costs. In a second manual stocktaking method, a stacking machine needs to complete warehouse-in and warehouse-out operations during each goods verification operation, so the second method is time-consuming and labor-intensive, has low stocktaking efficiency and high energy consumption, shortens the service life of the stacking machine, and increases the life cycle costs.

Stacking machine video stocktaking method: A stacking machine needs to carry a camera to traverse an entire stereoscopic warehouse to acquire video streams, thus forming a stocktaking database for comparison with an inventory database, to complete stocktaking. This method requires the stacking machine to run in two directions to traverse the entire warehouse, which is high in energy consumption, long in operation time, and low in efficiency. Moreover, during stocktaking of a double-extension stereoscopic warehouse, it is difficult to comprehensively capture goods in a goods location far from the stacking machine, which affects the stocktaking accuracy.

UAV stocktaking method: Patent No. 202010213428. X discloses an RFID warehouse logistics method and system based on the UAV. The system needs to carry an RFID card reader, an image processing system, a positioning system, a height sensor, and the like, and labels need to be arranged on shelves and goods. The system is redundant and costly and has high energy consumption because of a plurality of sensing and data acquisition devices. The RFID reader has a large error rate, and the stocktaking path of the UAV has poor real-time updatability. When the stacking machine or another device fails, a safety issue such as collision easily occurs. Patent No. 202210344350.4 discloses a UAV stocktaking system. The system needs to carry a scanning camera, a visual camera, a laser rangefinder, and an ultra wide band (UWB) positioning tag. Color identifications and other markers need to be arranged on environmental hardware such as shelves. The system is redundant and costly and has high energy consumption because of a plurality of sensing and data acquisition devices. A UWB positioning technology has high energy consumption and poor accuracy, and a stocktaking path of the UAV has poor real-time updatability. When the stacking machine or another device fails, a safety issue such as collision easily occurs. Patent No. 202010513538.8 discloses an indoor warehouse self-stocktaking system and method based on a UAV. The system needs to carry an image collector, a temperature and humidity collector, a WUB positioning device, an RFID reader, and the like, and labels need to be arranged on shelves and goods. The system is redundant and costly and has high energy consumption because of a plurality of sensing and data acquisition devices. The RFID reader has a large error rate, and a stocktaking path of the UAV has poor real-time updatability. When the stacking machine or another device fails, a safety issue such as collision easily occurs.

## SUMMARY

In view of this, the present disclosure aims to provide a rotary-wing unmanned aerial vehicle (UAV) stocktaking method and apparatus based on a digital twin, and a storage medium, to solve problems in the existing art that a manual stocktaking method has a high workload, low efficiency, and high labor costs, and a stacking machine video stocktaking method has high energy consumption, long operation time, and low efficiency. Furthermore, during stocktaking of a double-extension stereoscopic warehouse, it is difficult to comprehensively capture goods in a goods location far from a stacking machine, which affects stocktaking accuracy. Meanwhile, the following problems of an existing UAV stocktaking method are solved: A system is redundant and costly and has high energy consumption because of a plurality of sensing and data acquisition devices, and a UWB positioning technology has high energy consumption and low accuracy.

According to a first aspect of the embodiments of the present disclosure, a rotary-wing UAV stocktaking method based on a digital twin is provided, including:

building a digital twin model of a logistics warehouse, wherein the digital twin model of the logistics warehouse includes a virtual logistics warehouse, a virtual UAV, a virtual shelf, and virtual goods;
synchronizing warehouse-in and warehouse-out tasks into the digital twin model of the logistics warehouse, and synchronously updating the virtual goods on the virtual shelf according to the warehouse-in and warehouse-out tasks;
determining a region that requires stocktaking, and generating a UAV cruising path according to a preset path generation rule in the region that requires stocktaking;
enabling a real UAV and the virtual UAV to start cruising from an initial position of the UAV cruising path according to the UAV cruising path;
enabling the real UAV to take an actual goods photo every time the real UAV flies a distance of one shelf grid, and enabling the virtual UAV to take a virtual goods photo every time the virtual UAV flies a distance of one virtual shelf grid;
calculating the actual goods photo and the virtual goods photo by using an epipolar geometry algorithm, and determining whether there is a position offset of the real UAV relative to the virtual UAV;
if no position offset exists, calculate a similarity between the actual goods photo and the virtual goods photo, compare a calculation result with a preset similarity threshold, generate a stocktaking record of the shelf grid according to a comparison result, and continue cruising to a next shelf grid;
if a position offset exists, adjusting the position of the real UAV according to the position of the virtual UAV, enabling the actual UAV to take an actual goods photo again after the position of the actual UAV is adjusted, calculating a similarity with the virtual goods photo, generating a stocktaking record of the shelf grid, and continuing cruising to a next shelf grid; and
after the actual UAV and the virtual UAV have completed cruising along the UAV cruising path, obtaining stocktaking records of goods on all shelf grids in the region that requires stocktaking.

Preferably, calculating the actual goods photo and the virtual goods photo by using an epipolar geometry algorithm, and determining whether there is a position offset of the actual UAV relative to the virtual UAV includes:

respectively denoising the virtual goods photo and the actual goods photo through a mean filtering operation, and then performing a graying operation on the denoised photos;
respectively building a multi-scale space for the virtual goods photo and a multi-scale space for the actual goods photo, calculating an extreme value of a pixel point of the virtual goods photo in each scale and an extreme value of a pixel point of the actual goods photo in each scale, and selecting maximum extreme values of both the virtual goods photo and the actual goods photo in each scale space as feature points;
fitting the extreme values of the multi-scale spaces by using a continuous curve, determining a precise position and scale of each feature point, and using gradient information of the feature point and neighboring pixels as a direction parameter of the feature point, and respectively obtaining a virtual feature point set and an actual feature point set;
describing each feature point by using a 128-dimensional feature vector, selecting a virtual feature point from the virtual feature point set, traversing the entire actual feature point set, and obtaining, from the actual feature point set, two actual feature points that have the closest Euclidean distance from the selected virtual feature point, and calculating a ratio of a Euclidean distance between a closest actual feature point and the selected virtual feature point to a Euclidean distance between a closer actual feature point and the selected virtual feature point; if the ratio is less than a preset Euclidean distance threshold, indicating that matching succeeds, and using the selected virtual feature point and the actual feature point with the smallest Euclidean distance as a pair of matching feature points;

selecting another virtual feature point from the virtual feature point set, repeating the above process until all virtual feature points in the virtual feature point set are matched with the actual feature point set, and obtaining a plurality of pairs of matching feature points;

converting the obtained plurality of pairs of matching feature points in an image coordinate system into an image pixel coordinate system according to a mapping relationship between cameras;

obtaining a basic matrix according to an association relationship between the plurality of pairs of matching feature points of the virtual goods photo and the actual goods photo in the image pixel coordinate system;

obtaining an essential matrix according to an association relationship between the basic matrix and the essential matrix, obtaining a rotation matrix R and a translation matrix t of an actual camera relative to a virtual camera according to the essential matrix; and

calculating, through the rotation matrix R and the translation matrix t, whether there is a position offset of the actual UAV relative to the virtual UAV.

Preferably, the calculating similarity between the actual goods photo and the virtual goods photo includes:

Graying the actual goods photo and the virtual goods photo;

Using a Gaussian weighting function with a preset standard deviation as a weighting window, calculating a pixel point in the grayed actual goods photo and a pixel point in the grayed virtual goods photo to obtain a structural similarity index measure (SSIM) index mapping matrix composed of partial SSIM indexes, calculating an average SSIM index of the SSIM index mapping matrix, and using the average SSIM index of the SSIM index mapping matrix as the similarity.

Preferably, generating a UAV cruising path according to a preset path generation rule in the region that requires stocktaking includes:

using an intersection point of four corner points of each shelf grid as a base point, connecting the base points of the shelf grids from low to high, from a warehouse-in end to a warehouse-out end, and using a connecting line of the base points as the UAV cruising path.

Preferably, the digital twin model of the logistics warehouse further includes:

a virtual stacking machine and a virtual shuttle vehicle;

the digital twin model of the logistics warehouse obtains programmable logic control (PLC) motion data of an actual stacking machine and PLC motion data of an actual shuttle machine, and drives the virtual stacking machine and virtual shuttle vehicle to move in the virtual logistics warehouse according to the PLC motion data; and

in the cruising process of the virtual UAV according to the UAV cruising path, when the digital twin model of the logistics warehouse determines that a cruising path of the virtual UAV to a next cruising base point conflicts with a motion path of the virtual stacking machine or the virtual shuttle vehicle, the digital twin model of the logistics warehouse sounds a collision alarm.

Preferably, the method further includes:

setting a plurality of safe docking points in the UAV cruising path; when the digital twin model of the logistics warehouse sounds the collision alarm,

controlling the virtual UAV to fly to a safe docking point that is closest to the current position of the virtual UAV, and synchronously controlling the actual UAV to fly to a corresponding safe docking point; and

when the digital twin model of the logistics warehouse determines that the virtual stacking machine or the virtual shuttle vehicle has passed through the next cruising base point of the virtual UAV, controlling the virtual UAV to return to an original cruising position and continue cruising to the next cruising base point according to the UAV cruising path, and synchronously controlling the actual UAV to return to the original cruising position and continue cruising to the next cruising base point according to the UAV cruising path.

According to a second aspect of the embodiments of the present disclosure, a rotary-wing UAV stocktaking apparatus based on a digital twin is provided, including:

a model building module, configured to build a digital twin model of a logistics warehouse, wherein the digital twin model of the logistics warehouse includes a virtual logistics warehouse, a virtual UAV, a virtual shelf, and virtual goods; a virtuality-reality synchronization module, configured to: synchronize warehouse-in and warehouse-out tasks into the digital twin model of the logistics warehouse, and synchronously update the virtual goods on the virtual shelf according to the warehouse-in and warehouse-out tasks;

a path generation module, configured to: determine a region that requires stocktaking, and generate a UAV cruising path according to a preset path generation rule in the region that requires stocktaking;

a cruising module, configured to enable an actual UAV and the virtual UAV to start cruising from an initial position of the UAV cruising path according to the UAV cruising path;

a pose calibration module, configured to: enable the actual UAV to take an actual goods photo every time the actual UAV flies a distance of one shelf grid, and enable the virtual UAV to take a virtual goods photo every time the virtual UAV flies a distance of one virtual shelf grid;

calculate the actual goods photo and the virtual goods photo by using an epipolar geometry algorithm, and determine whether there is a position offset of the actual UAV relative to the virtual UAV;

if no position offset exists, calculate a similarity between the actual goods photo and the virtual goods photo, compare a calculation result with a preset similarity threshold, generate a stocktaking record of the shelf grid according to a comparison result, and continue cruising to a next shelf grid;

if a position offset exists, adjust the position of the actual UAV according to the position of the virtual UAV, and enable the actual UAV to take an actual goods photo again after the position of the actual UAV is adjusted, calculate a similarity with the virtual goods photo, generate a stocktaking record of the shelf grid, and continue cruising to a next shelf grid; and

a stocktaking record generation module, configured to: after the actual UAV and the virtual UAV have completed cruising along the UAV cruising path, obtain stocktaking records of goods on all shelf grids in the region that requires stocktaking.

According to a third aspect of the embodiments of the present disclosure, a storage medium is provided, having a computer program stored thereon. The computer program, when executed by a main controller, implements the steps of the digital twin-based rotary-wing UAV inventory scanning method.

The technical solutions provided by the embodiments of the present disclosure can include the following beneficial effects:

In the present disclosure, by building a digital twin model of a logistics warehouse, warehouse-in and warehouse-out tasks are synchronized in the digital twin model, to implement virtuality-reality synchronization of goods. Meanwhile, virtual and actual UAVs are controlled to move forward according to a planned path. In the cruising process of the UAVs, cameras are used to take photos of goods on shelf grids for virtuality and reality comparison, thereby determining the accuracy of the goods on the shelf grids and avoiding the problem of wrong stacking of goods caused by a mistake of a manual searching operation in an actual warehouse. In addition, in the cruising process of the UAVs, coordinate offsets of the virtual and actual UAVs are determined by an epipolar geometry algorithm, so that the position of an actual UAV is calibrated in actual time based on the position of a virtual UAV, which can avoid gradual deviation of the actual UAV from the original planned path due to external interference and improve instantaneity of a path of a UAV. Human participation is not required; the quantity of sensors involved is small, so energy consumption is low; and photos are taken independently for each shelf so that the photos have high clarity.

It should be understood that the foregoing general descriptions and the following detailed descriptions are merely for illustration and explanation purposes and are not intended to limit the present disclosure.

## BRIEF DESCRIPTION OF THE DRAWINGS

The drawings here are incorporated into and form part of the specification, showing the embodiments that comply with the present disclosure and are used together with the specification to explain the principles of the present disclosure.

FIG. 1 is a flowchart of a rotary-wing UAV stocktaking method based on digital twin according to an exemplary embodiment;

FIG. 2 is a schematic diagram of planning a UAV cruising path according to another exemplary embodiment;

FIG. 3 is a schematic diagram of a calibration principle for the position of a UAV according to another exemplary embodiment; and

FIG. 4 is a schematic system diagram of a rotary-wing UAV stocktaking apparatus based on a digital twin according to another exemplary embodiment.

In the accompanying drawings: 1: model building module; 2: virtuality-reality synchronization module; 3: path generation module; 4: cruising module; 5: pose calibration module; and 6: stocktaking record generation module.

## DETAILED DESCRIPTION OF THE EMBODIMENTS

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with the present disclosure. On the contrary, they are only examples of apparatuses and methods consistent with some aspects of the present disclosure as detailed in the attached claims.

**Embodiment I**

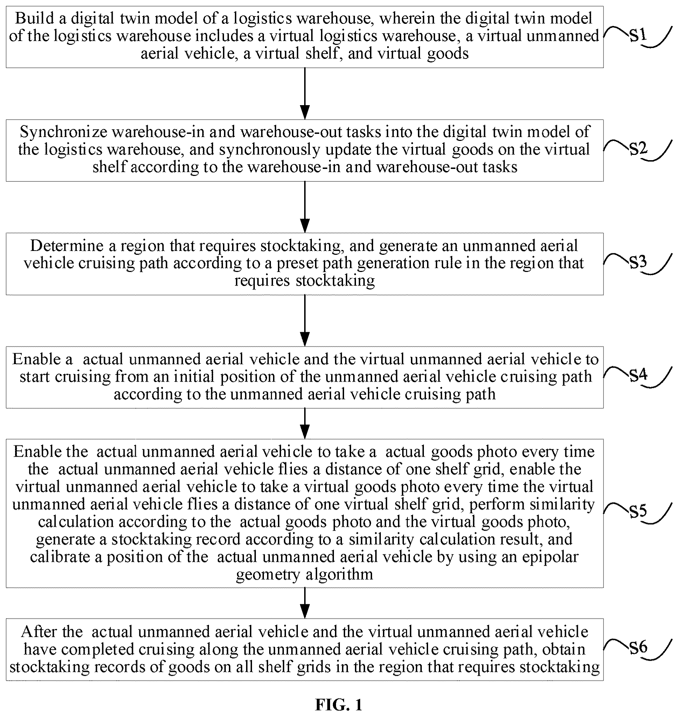

FIG. 1 is a flowchart of a rotary-wing UAV stocktaking method based on digital twin according to an exemplary embodiment. As shown in FIG. 1, the method includes:

> S1: Build a digital twin model of a logistics warehouse, wherein the digital twin model of the logistics warehouse includes a virtual logistics warehouse, a virtual UAV, a virtual shelf, and virtual goods.
> S2: Synchronize warehouse-in and warehouse-out tasks into the digital twin model of the logistics warehouse, and synchronously update the virtual goods on the virtual shelf according to the warehouse-in and warehouse-out tasks.
> S3: Determine a region that requires stocktaking, and generate a UAV cruising path according to a preset path generation rule in the region that requires stocktaking.
> S4: Enable an actual UAV and the virtual UAV to start cruising from an initial position of the UAV cruising path according to the UAV cruising path.
> S5: Enable the actual UAV to take an actual goods photo every time the actual UAV flies a distance of one shelf grid, and enable the virtual UAV to take a virtual goods photo every time the virtual UAV flies a distance of one virtual shelf grid;
> calculate the actual goods photo and the virtual goods photo by using an epipolar geometry algorithm, and determine whether there is a position offset of the actual UAV relative to the virtual UAV;
> if no position offset exists, calculate a similarity between the actual goods photo and the virtual goods photo, compare a calculation result with a preset similarity threshold, generate a stocktaking record of the shelf grid according to a comparison result, and continue cruising to a next shelf grid;
> if a position offset exists, adjust the position of the actual UAV according to the position of the virtual UAV, and enable the actual UAV to take an actual goods photo again after the position of the actual UAV is adjusted, calculate a similarity with the virtual goods photo, generate a stocktaking record of the shelf grid, and continue cruising to a next shelf grid.
> S6: After the actual UAV and the virtual UAV have completed cruising along the UAV cruising path, obtain stocktaking records of goods on all shelf grids in the region that requires stocktaking.

It can be understood that by using 3D modeling software to build a geometric model of a logistics warehouse, a UAV, a shelf, goods, or like in a ratio of 1:1, and assigning a material, a color, a skin, a texture, and other appearance shapes, a UAV geometric model includes an industrial camera virtual model, parameters of which such as a virtual camera focal length and aperture are consistent with those of an actual camera of a UAV. A virtual model of a virtual lighting device is built, and parameters such as luminous flux, light intensity, and illuminance are adjusted to be consistent with the actual lighting parameters of a factory. Different identification labels are arranged on vertical columns of a shelf according to different shelf grids, and the same labels are arranged at positions, corresponding to the actual shelf, on a virtual shelf for shelf grid recognition and feature recognition. During the later photo taking, different shelf grids can be recognized, facilitating stocktaking on goods on each shelf grid. Then, warehouse-in and warehouse-out tasks are synchronized. When goods pass through a warehouse-in station, a photo of the goods is taken through an industrial camera, and a virtual model texture of the goods is updated, to ensure that the virtual model of the goods entering the warehouse has the same appearance as the actual goods. A region that requires stocktaking is determined, and a digital twin system forms a cruising path according to the distribution of the shelf grids, to determine whether a stocktaking UAV is at an initial position. If the stocktaking UAV is not at the initial position, the stocktaking UAV automatically cruises to the initial position and starts cruising according to a UAV cruising path. An actual UAV automatically cruises to a first shelf grid according to the cruising path (in the subsequent cycle, corresponding to the next position) and a photo of the goods is taken. A virtual UAV cruises to a first virtual shelf grid according to the cruising path and takes a virtual good photo. The photos are sent to an image processing module through a local area network. Through the virtual and actual photos, an epipolar geometry algorithm is used to calculate an offset of the actual UAV relative to the virtual UAV (due to various interferences when the actual UAV moves in an actual space, the actual UAV may deviate from a preset cruising trajectory. Since there is no interference with the virtual UAV, the virtual UAV may strictly follow the preset cruising path to fly. Therefore, within each cruising distance, the position of the actual UAV needs to be calibrated according to the position of the virtual UAV), and determine whether there is a relative motion (rotation and translation). If there is no such motion, a similarity between an actual goods photo and a virtual goods photo is calculated. A calculation result is compared with a preset similarity threshold. If the calculation result is less than the preset similarity threshold, "No" is recorded, otherwise, "Yes" is recorded, and a stocktaking record is generated. The UAVs continue cruising to the next shelf grid. If a relative motion exists, the position of the actual UAV is updated according to the position of the virtual UAV. After the position of the actual UAV is adjusted, an actual goods photo is taken again. A similarity with the virtual goods photo is calculated to generate a stocktaking record for the shelf grid. Then, the UAVs continue cruising to the next shelf grid until the UAVs fly the entire cruising path. In the present disclosure, by building a digital twin model of a logistics warehouse, warehouse-in and warehouse-out tasks are synchronized in the digital twin model, to implement virtuality-reality synchronization of goods. Meanwhile, virtual and actual UAVs are controlled to move forward according to a planned path. In the cruising process of UAVs, cameras are used to take photos of goods on shelf grids for virtuality and reality comparison, thereby determining the accuracy of the goods on the shelf grids and avoiding the problem of wrong stacking of goods caused by a mistake of a manual searching operation in an actual warehouse. In addition, in the cruising process of the UAVs, coordinate offsets of the virtual and actual UAVs are determined by an epipolar geometry algorithm, so that the position of an actual UAV is calibrated in actual time based on the position of a virtual UAV, which can avoid gradual deviation of the actual UAV from the original planned path due to external interference and improve instantaneity of a path of a UAV. Human participation is not required; the quantity of sensors involved is small, so energy consumption is low, and photos are taken independently for each shelf so that the photos have high clarity.

Preferably, calculating the actual goods photo and the virtual goods photo by using an epipolar geometry algorithm, and determining whether there is a position offset of the actual UAV relative to the virtual UAV includes:

respectively denoising the virtual goods photo and the actual goods photo through a mean filtering operation, and then performing a graying operation on the denoised photos;

respectively building a multi-scale space for the virtual goods photo and a multi-scale space for the actual goods photo, calculating an extreme value of a pixel point of the virtual goods photo in each scale and an extreme value of a pixel point of the actual goods photo in each scale, and selecting maximum extreme values of both the virtual goods photo and the actual goods photo in each scale space as feature points;

fitting the extreme values of the multi-scale spaces by using a continuous curve, determining a precise position and scale of each feature point, and using gradient information of the feature point and neighboring pixels as a direction parameter of the feature point, and respectively obtaining a virtual feature point set and an actual feature point set;

describing each feature point by using a 128-dimensional feature vector, selecting a virtual feature point from the virtual feature point set, traversing the entire actual feature point set, and obtaining, from the actual feature point set, two actual feature points that have the closest Euclidean distance from the selected virtual feature point, and calculating a ratio of a Euclidean distance between a closest actual feature point and the selected virtual feature point to a Euclidean distance between a closer actual feature point and the selected virtual feature point; if the ratio is less than a preset Euclidean distance threshold, indicating that matching succeeds, and using the selected virtual feature point and the actual feature point with the smallest Euclidean distance as a pair of matching feature points;

selecting another virtual feature point from the virtual feature point set, repeating the above process until all virtual feature points in the virtual feature point set are matched with the actual feature point set, and obtaining a plurality of pairs of matching feature points;

converting the obtained plurality of pairs of matching feature points in an image coordinate system into an image pixel coordinate system according to a mapping relationship between cameras;

obtaining a basic matrix according to an association relationship between the plurality of pairs of matching feature points of the virtual goods photo and the actual goods photo in the image pixel coordinate system;

obtaining an essential matrix according to an association relationship between the basic matrix and the essential matrix, obtaining a rotation matrix R and a translation matrix t of an actual camera relative to a virtual camera according to the essential matrix; and

calculating, through the rotation matrix R and the translation matrix t, whether there is a position offset of the actual UAV relative to the virtual UAV.

It can be understood that a world coordinate system $(O_w X_w Y_w Z_w)$ and a camera coordinate system $(O_c X_c Y_c Z_c)$ are built. The origin of the camera coordinate system is located at the photocenter $O_c$ of a camera. $O_c Z_c$ is parallel to the optical axis of an industrial camera and is perpendicular to an image plane. An intersection point is the origin of the coordinates of a physical imaging plane. $X_c$ and $Y_c$ are parallel to an $x$ axis and a $y$ axis of an image coordinate system. $O_c O_p$ is an equivalent camera focal length. The image coordinate system is $(O_p xy)$, wherein $O_p$ is an intersection point of an optical axis of a camera and an image. An image pixel coordinate system is $(O_u uv)$. Virtual and actual images are gray after denoising by mean filtering. A scale invariant feature transform (SIFT) algorithm is written through Python and is embedded into a Unity digital twin system. An image captured by an actual camera is compared with an image captured by a virtual camera: Scale spaces $L(x,y,\sigma) = G(x,y,\sigma)*I(x,y)$ of the virtual and actual images $I(x,y)$ (wherein

$$G\left(x,y,\sigma\right)=\frac{1}{2\pi\sigma^2}e^{-\frac{x^2+y^2}{2\sigma^2}}$$, $\sigma$ is a scale space factor, and $(x,y)$ represents pixel coordinates in the image) are respectively built. An extreme value DoG ($D(x,y,\sigma) = L(x,y,k\sigma)-L(x,y,\sigma)$, K is a factor of a difference of the same orders of the scale spaces) in each scale is calculated. By comparing the extreme value of each pixel point in the image in each scale, maximum extreme values in the scale space, and a two-dimensional space of the image (There is a maximum extreme value in each scale space. Since this is a multi-scale space, there is a plurality of maximum extreme values) are obtained. The DoG values of the scale spaces are fitted by using a continuous curve, to determine a precise position and scale of a feature point. Gradient information of the feature point and neighboring pixels is used as a direction parameter of the feature point.

The gradient is:

$$m(x,y) = \sqrt{\left(L(x,y+1) - L(x,y-1)\right)^2 + \left(L(x+1,y) - L(x-1,y)\right)^2},$$

the direction is: $\theta(x,y) = \tan^{-1}((L(x,y+1)-L(x,y-1))/(L(x+1,y)-L(x-1,y))))$.

Information $(x,y,\sigma,\theta)$ of a feature point is obtained, wherein $\theta$ represents the direction of the feature point, thus finally forming a virtual feature point set and an actual feature point set. A sampling region is formed by $16\times16$ pixels around a feature point and is averagely divided into $4\times4$ sampling units. Gradient information and direction information of the sampling units in eight directions (every 45 degrees is a direction) are respectively calculated, and each feature point can be described by using a $4\times4\times8=128$-dimensional feature vector. A feature point is taken from the virtual image, and the actual image is traversed to find out two feature points that have the smallest Euclidean distances (Euclidean distance

$$d\left(m_i, m_i'\right) = \sqrt{\sum_{j=1}^{128} \left(l_i^j - h_i^j\right)^2}$$ (wherein 1 and h are feature vector descriptors of each feature point)). A ratio of a closest value to a closer value is calculated. If the ratio is less than a threshold of 0.8, it indicates that matching succeeds, and coordinates $(x_m, y_m)$ and $(x_{m'}, y_{m'})$ of matching feature points in the virtual image and the actual image in the image coordinate system are obtained.

To solve pixel coordinates of the matching feature points, coordinates $(u_m, v_m)$ and $(u_{m'}, v_{m'})$ of the matching feature points in the image pixel coordinate system are solved through the following formula:

$$\begin{bmatrix} u \\ v \\ 1 \end{bmatrix} = \begin{bmatrix} \dfrac{1}{dx} & 0 & u_0 \\ 0 & \dfrac{1}{dy} & v_0 \\ 0 & 0 & 1 \end{bmatrix} \begin{bmatrix} x \\ y \\ 1 \end{bmatrix}$$ where $dx$ and $dy$ are the physical lengths of each pixel in an x-axis direction and a y-axis direction, $u_0$ and $v_0$ are pixel coordinates of the origin of the image coordinate system.

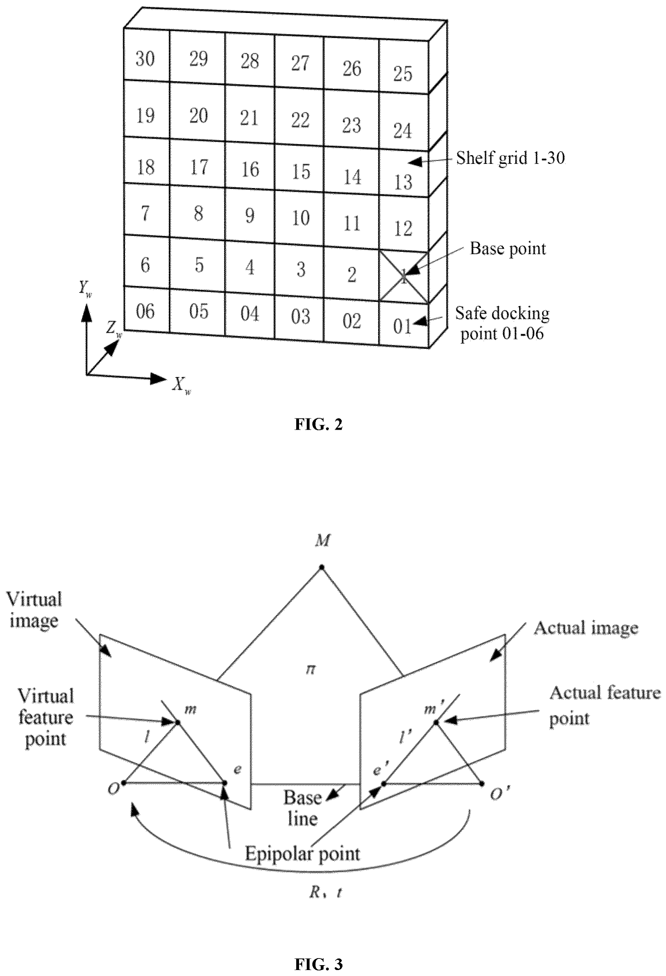

A correction principle is as follows: In an actual implementation process, since the virtual camera cruises according to a stocktaking path, the world coordinates of the virtual camera can be determined according to the cruising path. $(g_0 + g_1 + ... + 0.5g_y, c_0 + c_1 + ... + 0.5c_x, s)$, wherein g represents a story height; c represents the length of each row; s is the distance between the camera and a shelf. During each instance of correction of a pose of the actual camera, the world coordinate system is built on a virtual camera coordinate system. Matrix R and matrix t are set to be an angle transformation matrix and a displacement transformation matrix between the actual camera coordinate system and the virtual camera coordinate system. As shown in FIG. 3, a virtual model completely restores an actual world according to 1: 1, so that the virtual model and the actual world are the same. During the correction of the pose of the actual camera (a stocktaking UAV), an actual entity overlaps a virtual entity. O and O' are respectively photocenters of the virtual camera and the actual camera, m and m' are on epipolar planes and are respectively projection points of ray OM and ray O'M on imaging planes. Ray OM is on a $\pi$ plane. A projection line l' in a second imaging plane is a polar line. All three-dimensional spatial points M that are projected to point m inevitably exist on ray OM. That is, corresponding to the imaging point m in a first view, a matching imaging point m' in a second view also inevitably on 1'. Similarly, an imaging point of m' in the first view is inevitably on 1. A connecting line OO' is a baseline. Intersection points of the baseline and the virtual and actual images are polar points e and e'. A plane OO'M is a polar plane $\pi$. O and O' have a rotation matrix R and a displacement transformation matrix t in the world coordinate system.

After the coordinates of an optimal feature point pair in the image pixel coordinate system are obtained, it is by formula $m_i^{'T} F m_i = 0$ .

where $m_i$ and $m_i^{'}$ are homogeneous coordinates of the optimal feature point pair in the image pixel coordinate system; T represents matrix transpose calculation; and F represents a basic matrix. Since F (the basic matrix) is a 3×3 homogeneous matrix with a rank of 2 and a degree of freedom of 7, seven groups of matching feature points can be randomly selected, and F can be solved by using a 7-point method. The correctness of the matching feature points can be verified through the basic matrix, and wrong matching points can be culled out from the original matching points.

An essential matrix E and the basic matrix F have a relationship $F = K^{-T} E K^{-1}$, wherein $E = [t]_{\times} R$. SVD is used for solving. E has one singular value that is zero and the other two singular values that are equal, namely $E = U diag(k, k, 0)V^T$, (k is a singular value).

$$\begin{cases} [t]_{\times} = UZU^T \\ R = UWV^T \end{cases} 其中:W = \begin{bmatrix} 0 & -1 & 0 \\ 1 & 0 & 0 \\ 0 & 0 & 1 \end{bmatrix}, \quad Z = \begin{bmatrix} 0 & 1 & 0 \\ -1 & 0 & 0 \\ 0 & 0 & 0 \end{bmatrix}$$

Thus, the rotation matrix R and the translation matrix t of the actual camera relative to the virtual camera can be obtained, and the pose of the actual camera is corrected based on the position of the virtual camera.

Preferably, the calculating similarity between the actual goods photo and the virtual goods photo includes:

graying the actual goods photo and the virtual goods photo;

using a Gaussian weighting function with a preset standard deviation as a weighting window, calculating a pixel point in the grayed actual goods photo and a pixel point in the grayed virtual goods photo to obtain a structural similarity index measure (SSIM) index mapping matrix composed of partial SSIM indexes, calculating an average SSIM index of the SSIM index mapping matrix, and using the average SSIM index of the SSIM index mapping matrix as the similarity.

Understandably, the physical image and the virtual image taken after adjusting the position of the physical UAV are grayed out, and the virtual images are grayed. A Gaussian weighting function with a standard deviation of 1.5 is used as a weighting window. In each step, calculation is performed based on pixels in the window, to obtain an SSIM index mapping matrix composed of partial SSIM indexes. An average SSIM index is calculated. A calculation formula for the SSIM index is:

$$SSIM(a,b) = \frac{(2\mu_a\mu_b + c_1)(2\sigma_{ab} + c_2)}{(\mu_a^2 + \mu_b^2 + c_1)(\sigma_a^2 + \sigma_b^2 + c_2)},$$

where a and b respectively represent the virtual goods photo and the actual goods photo; $\mu_a$ represents an average value of pixels of image a; $\mu_a$ represents an average value of pixels of image b; $\sigma_a^2$ represents a variance of the pixels of image a; $\sigma_b^2$ represents a variance of the pixels of image b; $\sigma_{ab}$ represents a variance difference between a and b; $c_1 = (k_1 L)^2$ and $c_2 = (k_2 L)^2$ are constants for maintaining stability; L represents a value range of a pixel value; $k_1 = 0.01$, $k_2 = 0.03$; a calculation result is used as the similarity with the virtual photo; and the similarity is compared with a preset similarity threshold which is set to 0.9 and may be adjusted according to an actual use effect. When the similarity is greater than 0.9, "Yes" is recorded. When the similarity is less than or equal to 0.9, "No" is recorded.

Preferably, generating a UAV cruising path according to a preset path generation rule in the region that requires stocktaking includes: using an intersection point of four corner points of each shelf grid as a base point, connecting the base points of the shelf grids from low to high, from a warehouse-in end to a warehouse-out end, and using a connecting line of the base points as the UAV cruising path.

It can be understood that as shown in FIG. 2, the shelf is a cuboid three-dimensional shelf. Each shelf has a plurality of shelf grids, such as shelf grid 1 and shelf grid 2. According to shelf grid 1 in FIG. 2, an intersection point of connecting lines of four corner points is used as a base point, namely, a midpoint of the shelf grid. The base points of the shelf grids are connected from low to high and from a warehouse-in end to a warehouse-out end. The UAV stops at the base of each shelf grid to take photographs of the goods in that grid. Each shelf grid is recognized through a label on the shelf grid.

Preferably,
the digital twin model of the logistics warehouse further includes:

a virtual stacking machine and a virtual shuttle vehicle;
the digital twin model of the logistics warehouse obtains programmable logic control (PLC) motion data of an actual stacking machine and PLC motion data of an actual shuttle machine, and drives the virtual stacking machine and virtual shuttle vehicle to move in the virtual logistics warehouse according to the PLC motion data; and
in the cruising process of the virtual UAV according to the UAV cruising path, when the digital twin model of the logistics warehouse determines that the cruising path of the virtual UAV to the next cruising base point conflicts with the motion path of the virtual stacking machine or the virtual shuttle vehicle, the digital twin model of the logistics warehouse sounds a collision alarm.

It can be understood that the digital twin system is connected to a PLC of a motion device such as the stacking machine or the shuttle vehicle through S7.net, reads motion data, and drives the virtual model of the stacking machine, the shuttle vehicle, or the like to move. When a route of the UAV to the next cruising base point conflicts with a motion path of the device such as the stacking machine in the stocktaking process, the digital twin system sounds an alarm that indicates a collision danger.

Preferably, the method further includes:

setting a plurality of safe docking points in the UAV cruising path; when the digital twin model of the logistics warehouse sounds the collision alarm,
controlling the virtual UAV to fly to a safe docking point that is closest to the current position of the virtual UAV, and synchronously controlling the actual UAV to fly to a corresponding safe docking point; and
when the digital twin model of the logistics warehouse determines that the virtual stacking machine or the virtual shuttle vehicle has passed through the next cruising base point of the virtual UAV, controlling the virtual UAV to return to an original cruising position and continue cruising to the next cruising base point according to the UAV cruising path, and synchronously controlling the actual UAV to return to the original cruising position and continue cruising to the next cruising base point according to the UAV cruising path.

It can be understood that as shown in FIG. 2, a safe docking point is arranged below each shelf. When the digital twin system of the logistics warehouse sounds the collision alarm, the virtual UAV is controlled to fly to a safe docking point that is closest to the current position of the virtual UAV, and the actual UAV is synchronously controlled to fly to the corresponding safe docking point. In short, if the digital twin system sounds the collision alarm when the UAV is at the base point of shelf grid 1 or moves from shelf grid 1 to the base point of shelf point 2, the digital twin system determines whether the UAV is closer to safe docking point 1 or safe docking point 2 at this time, and selects a closer safe docking point for hiding until the virtual stacking machine or the virtual shuttle vehicle has passed through the base point of shelf grid 2. In this case, the UAV returns to the original cruising path and continues cruising to the base point of shelf grid 2.

**Embodiment II**

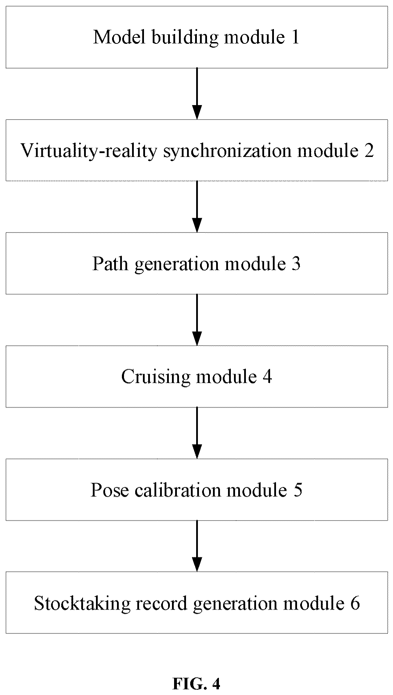

This embodiment further discloses a schematic system diagram of a digital twin-based rotary wing UAV inventory device, as shown in FIG. 4, including:

**a** model building module 1, configured to build a digital twin model of a logistics warehouse, wherein the digital twin model of the logistics warehouse includes a virtual logistics warehouse, a virtual UAV, a virtual shelf, and virtual goods;
a virtuality-reality synchronization module 2, configured to: synchronize warehouse-in and warehouse-out tasks into the digital twin model of the logistics warehouse, and synchronously update the virtual goods on the virtual shelf according to the warehouse-in and warehouse-out tasks;
a path generation module 3, configured to: determine a region that requires stocktaking, and generate a UAV cruising path according to a preset path generation rule in the region that requires stocktaking;
a cruising module 4, configured to enable an actual UAV and the virtual UAV to start cruising from an initial position of the UAV cruising path according to the UAV cruising path;
a pose calibration module 5, configured to: enable the actual UAV to take the actual goods photo every time the actual UAV flies a distance of one shelf grid, and enable the virtual UAV to take a virtual goods photo every time the virtual UAV flies a distance of one virtual shelf grid;
calculate the actual goods photo and the virtual goods photo by using an epipolar geometry algorithm, which is used to determine whether there is a relative positional offset between the actual UAV and the virtual UAV;

if no position offset exists, calculate a similarity between the actual goods photo and the virtual goods photo, compare a calculation result with a preset similarity threshold, generate a stocktaking record of the shelf grid according to a comparison result, and continue cruising to a next shelf grid;

if a position offset exists, adjust the position of the actual UAV according to the position of the virtual UAV, and enable the actual UAV to take an actual goods photo again after the position of the actual UAV is adjusted, calculate a similarity with the virtual goods photo, generate a stocktaking record of the shelf grid, and continue cruising to a next shelf grid; and

a stocktaking record generation module 6, configured to: after the actual UAV and the virtual UAV have completed cruising along the UAV cruising path, obtain stocktaking records of goods on all shelf grids in the region that requires stocktaking.

It can be understood that in the present disclosure, the model building module 1 is configured to build the digital twin model of the logistics warehouse. The digital twin model of the logistics warehouse includes the virtual logistics warehouse, the virtual UAV, the virtual shelf, and the virtual goods. The virtuality-reality synchronization module 2 is configured to: synchronize the warehouse-in and warehouse-out tasks into the digital twin model of the logistics warehouse, and synchronously update the virtual goods on the virtual shelf according to the warehouse-in and warehouse-out tasks. The path generation module 3 is configured to: determine the region that requires stocktaking, and generate the UAV cruising path according to a preset path generation rule in the region that requires stocktaking. The cruising module 4 is configured to enable the actual UAV and the virtual UAV to start cruising from the initial position of the UAV cruising path according to the UAV cruising path. The pose calibration module 5 is configured to: enable the actual UAV to take the actual goods photo every time the actual UAV flies a distance of one shelf grid, and enable the virtual UAV to take the virtual goods photo every time the virtual UAV flies a distance of one virtual shelf grid; calculate the actual goods photo and the virtual goods photo by using the epipolar geometry algorithm, and determine whether there is a position offset of the actual UAV relative to the virtual UAV; if no position offset exists, calculate a similarity between the actual goods photo and the virtual goods photo, compare a calculation result with a preset similarity threshold, generate a stocktaking record of the shelf grid according to a comparison result, and continue cruising to a next shelf grid; if a position offset exists, adjust a position of the actual UAV according to a position of the virtual UAV, enable the actual UAV to take a actual goods photo again after the position of the actual UAV is adjusted, calculate a similarity with the virtual goods photo, generate a stocktaking record of the shelf grid, and continue cruising to a next shelf grid. The stocktaking record generation module 6 is configured to: after the actual UAV and the virtual UAV have completed cruising along the UAV cruising path, obtain the stocktaking records of the goods on all the shelf grids in the region that requires stocktaking. In the present disclosure, by building a digital twin model of a logistics warehouse, warehouse-in and warehouse-out tasks are synchronized in the digital twin model, to implement virtuality-reality synchronization of goods. Meanwhile, virtual and actual UAVs are controlled to move forward according to a planned path. In the cruising process of the UAVs, cameras are used to take photos of goods on shelf grids for virtuality and reality comparison, thereby determining the accuracy of the goods on the shelf grids and avoiding the problem of wrong stacking of goods caused by a mistake of a manual searching operation in an actual warehouse. In addition, in the cruising process of the UAVs, coordinate offsets of the virtual and actual UAVs are determined by an epipolar geometry algorithm, so that the position of an actual UAV is calibrated in actual time based on the position of a virtual UAV, which can avoid gradual deviation of the actual UAV from the original planned path due to external interference and improve instantaneity of a path of a UAV. Human participation is not required; the quantity of sensors involved is small, so energy consumption is low; and photos are taken independently for each shelf so that the photos have high clarity.

**Embodiment III**

This embodiment provides a storage medium, having a computer program stored thereon. The computer program, when executed by a main controller, implements the steps in the above method.

It can be understood that the storage medium mentioned above is a read-only memory (ROM), a magnetic disc, a compact disc, or the like.

It can be understood that the same or similar parts in the above embodiments can be referenced to each other. Content not detailed in some embodiments can be found in the same or similar content in other embodiments.

It should be noted that in the description of the present disclosure, the terms "first", "second", and the like are merely used for description, but cannot be understood as indicating or implying the relative importance. In addition, in the description of the present disclosure, "a plurality of" means at least two, unless otherwise specified.

Any process or method description in the flowchart or otherwise described herein can be understood as a module, fragment, or part representing a code that includes one or more executable instructions for implementing particular logic functions or steps of processes, and the scopes of the preferred implementations of the present disclosure include other implementations. The functions can be executed in a manner other than the order shown or discussed, including a substantially simultaneous manner or a reverse order according to the functions involved. This shall be understood by those skilled in the art to which the embodiments of the present disclosure belong.

It should be understood that the various parts of the present disclosure can be implemented using hardware, software, firmware, or a combination of the above. In the above implementations, a plurality of steps or methods can be implemented using software or firmware stored in the memory and executed by an appropriate instruction execution system. For example, if it is implemented using hardware, as in another implementation, the steps or methods can be implemented using any of the following well-known technologies in the art or a combination of the technologies: a discrete logic circuit with a logic gate circuit for achieving a logic function on a data signal, an application-specific integrated circuit with an appropriate combined logic gate circuit, a programmable gate array (PGA), a field programmable gate array (FPGA), and the like.

A person of ordinary skill in the art can understand that all or some of the steps in the methods of the foregoing embodiments may be completed by instructing related hardware through programs. The programs may be stored in a computer-readable storage medium. The programs, when executed, include one or a combination of the steps of the method embodiments.

In addition, functional units in embodiments of the present disclosure may be integrated into one processing module, or each of the units may exist alone really, or two or more units are integrated into one module. The integrated modules mentioned above can be implemented in both a hardware form and a software functional module form. When the integrated module is implemented in the form of a software functional module and sold or used as an independent product, the integrated module may be stored in a computer-readable storage medium. the storage medium mentioned above may be a ROM, a magnetic disc, a compact disc, or the like.

In the description of this specification, the description referring to the terms "one embodiment", "some embodiments", "an example", "specific examples", "some examples", or the like means that specific features, structures, materials or characteristics described in connection with the embodiments or examples are included in at least one embodiment or example of the present disclosure. In this specification, the schematic representations of the above terms are not necessarily intended to refer to the same embodiment or example. Furthermore, the specific features, structures, materials, or characteristics described may be combined in any suitable manner in any one or more embodiments or examples.

The embodiments of the present disclosure have been shown and described above, but it can be understood that the above embodiments are exemplary and cannot be understood as limitations on the present disclosure. A person of ordinary skill in the art may make changes, modifications, substitutions, and transformations to the above embodiments within the scope of the present disclosure.

## Claims

1. A rotary-wing UAV stocktaking method based on digital twin, comprising:

   building a digital twin model of a logistics warehouse, wherein the digital twin model of the logistics warehouse comprises a virtual logistics warehouse, a virtual UAV, a virtual shelf, and virtual goods;
   synchronizing warehouse-in and warehouse-out tasks into the digital twin model of the logistics warehouse, and synchronously updating the virtual goods on the virtual shelf according to the warehouse-in and warehouse-out tasks;
   determining a region that requires stocktaking, and generating a UAV cruising path according to a preset path generation rule in the region that requires stocktaking;
   enabling an actual UAV and the virtual UAV to start cruising from an initial position of the UAV cruising path according to the UAV cruising path;
   enabling the actual UAV to take an actual goods photo every time the actual UAV flies a distance of one shelf grid, and enabling the virtual UAV to take a virtual goods photo every time the virtual UAV flies a distance of one virtual shelf grid;
   calculating the actual goods photo and the virtual goods photo by using an epipolar geometry algorithm, and determining whether there is a position offset of the actual UAV relative to the virtual UAV;
   if no position offset exists, calculating a similarity between the actual goods photo and the virtual goods photo, comparing a calculation result with a preset similarity threshold, generating a stocktaking record of the shelf grid according to a comparison result, and continuing cruising to a next shelf grid;
   if a position offset exists, adjusting a position of the actual UAV according to a position of the virtual UAV, enabling the actual UAV to take an actual goods photo again after the position of the actual UAV is adjusted, calculating a similarity with the virtual goods photo, generating a stocktaking record of the shelf grid, and continuing cruising to a next shelf grid; and

after the actual UAV and the virtual UAV have completed cruising along the UAV cruising path, obtaining stocktaking records of goods on all shelf grids in the region that requires stocktaking.

2. The method according to claim 1, wherein
the calculating the actual goods photo and the virtual goods photo by using an epipolar geometry algorithm, and determining whether there is a position offset of the actual UAV relative to the virtual UAV comprises:

respectively denoising the virtual goods photo and the actual goods photo through a mean filtering operation, and then performing a graying operation on the denoised photos;
respectively building a multi-scale space for the virtual goods photo and a multi-scale space for the actual goods photo, calculating an extreme value of a pixel point of the virtual goods photo in each scale and an extreme value of a pixel point of the actual goods photo in each scale, and selecting maximum extreme values of both the virtual goods photo and the actual goods photo in each scale space as feature points;
fitting the extreme values of the multi-scale spaces by using a continuous curve, determining a precise position and scale of each feature point, and using gradient information of the feature point and neighboring pixels as a direction parameter of the feature point, and respectively obtaining a virtual feature point set and an actual feature point set;
describing each feature point by using a 128-dimensional feature vector, selecting a virtual feature point from the virtual feature point set, traversing the entire actual feature point set, obtaining, from the actual feature point set, two actual feature points that have a closest Euclidean distance from the selected virtual feature point, and calculating a ratio of a Euclidean distance between a closest actual feature point and the selected virtual feature point to a Euclidean distance between a closer actual feature point and the selected virtual feature point; if the ratio is less than a preset Euclidean distance threshold, indicating that matching succeeds, and using the selected virtual feature point and the actual feature point with the smallest Euclidean distance as a pair of matching feature points;
selecting another virtual feature point from the virtual feature point set, repeating the above process until all virtual feature points in the virtual feature point set are matched with the actual feature point set, and obtaining a plurality of pairs of matching feature points;
converting the obtained plurality of pairs of matching feature points in an image coordinate system into an image pixel coordinate system according to a mapping relationship between cameras;
obtaining a basic matrix according to an association relationship between the plurality of pairs of matching feature points of the virtual goods photo and the actual goods photo in the image pixel coordinate system;
obtaining an essential matrix according to an association relationship between the basic matrix and the essential matrix, obtaining a rotation matrix R and a translation matrix t of an actual camera relative to a virtual camera according to the essential matrix; and
calculating, through the rotation matrix R and the translation matrix t, whether there is a position offset of the actual UAV relative to the virtual UAV.

3. The method according to claim 1, wherein
the calculating a similarity between the actual goods photo and the virtual goods photo comprises:

graying the actual goods photo and the virtual goods photo;
using a Gaussian weighting function with a preset standard deviation as a weighting window, calculating a pixel point in the grayed actual goods photo and a pixel point in the grayed virtual goods photo to obtain a structural similarity index measure (SSIM) index mapping matrix composed of partial SSIM indexes, calculating an average SSIM index of the SSIM index mapping matrix, and using the average SSIM index of the SSIM index mapping matrix as the similarity.

4. The method according to claim 1, wherein
generating a UAV cruising path according to a preset path generation rule in the region that requires stocktaking comprises:
using an intersection point of four corner points of each shelf grid as a base point, connecting the base points of the shelf grids from low to high, from a warehouse-in end to a warehouse-out end, and using a connecting line of the base points as the UAV cruising path.

5. The method according to claim 4, wherein
the digital twin model of the logistics warehouse further comprises:

a virtual stacking machine and a virtual shuttle vehicle;

the digital twin model of the logistics warehouse obtains programmable logic control (PLC) motion data of an actual stacking machine and PLC motion data of an actual shuttle machine, and drives the virtual stacking machine and virtual shuttle vehicle to move in the virtual logistics warehouse according to the PLC motion data; and

in the cruising process of the virtual UAV according to the UAV cruising path, when the digital twin model of the logistics warehouse determines that a cruising path of the virtual UAV to a next cruising base point conflicts with a motion path of the virtual stacking machine or the virtual shuttle vehicle, the digital twin model of the logistics warehouse sounds a collision alarm.

6. The method according to claim 5, further comprising:

setting a plurality of safe docking points in the UAV cruising path; when the digital twin model of the logistics warehouse sounds the collision alarm,

controlling the virtual UAV to fly to a safe docking point that is closest to a current position of the virtual UAV, synchronously controlling the actual UAV to fly to a corresponding safe docking point; and

when the digital twin model of the logistics warehouse determines that the virtual stacking machine or the virtual shuttle vehicle has passed through the next cruising base point of the virtual UAV, controlling the virtual UAV to return to an original cruising position and continue cruising to the next cruising base point according to the UAV cruising path, and synchronously controlling the actual UAV to return to the original cruising position and continue cruising to the next cruising base point according to the UAV cruising path.

7. A rotary-wing UAV stocktaking apparatus based on the digital twin, comprising:

a model building module, configured to build a digital twin model of a logistics warehouse, wherein the digital twin model of the logistics warehouse comprises a virtual logistics warehouse, a virtual UAV, a virtual shelf, and virtual goods;

a virtuality-reality synchronization module, configured to: synchronize warehouse-in and warehouse-out tasks into the digital twin model of the logistics warehouse, and synchronously update the virtual goods on the virtual shelf according to the warehouse-in and warehouse-out tasks;

a path generation module, configured to: determine a region that requires stocktaking, and generate a UAV cruising path according to a preset path generation rule in the region that requires stocktaking;

a cruising module, configured to enable an actual UAV and the virtual UAV to start cruising from an initial position of the UAV cruising path according to the UAV cruising path;

a pose calibration module, configured to: enable the actual UAV to take an actual goods photo every time the actual UAV flies a distance of one shelf grid, and enable the virtual UAV to take a virtual goods photo every time the virtual UAV flies a distance of one virtual shelf grid;

calculate the actual goods photo and the virtual goods photo by using an epipolar geometry algorithm, and determine whether there is a position offset of the actual UAV relative to the virtual UAV;

if no position offset exists, calculate a similarity between the actual goods photo and the virtual goods photo, compare a calculation result with a preset similarity threshold, generate a stocktaking record of the shelf grid according to a comparison result, and continue cruising to a next shelf grid;

if a position offset exists, adjust a position of the actual UAV according to a position of the virtual UAV, enable the actual UAV to take an actual goods photo again after the position of the actual UAV is adjusted, calculate a similarity with the virtual goods photo, generate a stocktaking record of the shelf grid, and continue cruising to a next shelf grid; and

a stocktaking record generation module, configured to: after the actual UAV and the virtual UAV have completed cruising along the UAV cruising path, obtain stocktaking records of goods on all shelf grids in the region that requires stocktaking.

8. A storage medium, having a computer program stored thereon, wherein the computer program, when executed by a main controller, implements the steps in the rotary-wing UAV stocktaking method based on the digital twin according to any one of claims 1 to 6.

Build a digital twin model of a logistics warehouse, wherein the digital twin model of the logistics warehouse includes a virtual logistics warehouse, a virtual unmanned aerial vehicle, a virtual shelf, and virtual goods    S1

Synchronize warehouse-in and warehouse-out tasks into the digital twin model of the logistics warehouse, and synchronously update the virtual goods on the virtual shelf according to the warehouse-in and warehouse-out tasks    S2

Determine a region that requires stocktaking, and generate an unmanned aerial vehicle cruising path according to a preset path generation rule in the region that requires stocktaking    S3

Enable a actual unmanned aerial vehicle and the virtual unmanned aerial vehicle to start cruising from an initial position of the unmanned aerial vehicle cruising path according to the unmanned aerial vehicle cruising path    S4

Enable the actual unmanned aerial vehicle to take a actual goods photo every time the actual unmanned aerial vehicle flies a distance of one shelf grid, enable the virtual unmanned aerial vehicle to take a virtual goods photo every time the virtual unmanned aerial vehicle flies a distance of one virtual shelf grid, perform similarity calculation according to the actual goods photo and the virtual goods photo, generate a stocktaking record according to a similarity calculation result, and calibrate a position of the actual unmanned aerial vehicle by using an epipolar geometry algorithm    S5

After the actual unmanned aerial vehicle and the virtual unmanned aerial vehicle have completed cruising along the unmanned aerial vehicle cruising path, obtain stocktaking records of goods on all shelf grids in the region that requires stocktaking    S6

**FIG. 1**

FIG. 2

FIG. 3

Model building module 1

↓

Virtuality-reality synchronization module 2

↓

Path generation module 3

↓

Cruising module 4

↓

Pose calibration module 5

↓

Stocktaking record generation module 6

FIG. 4

# INTERNATIONAL SEARCH REPORT

| International application No. |
|---|
| **PCT/CN2024/080202** |

| A. | CLASSIFICATION OF SUBJECT MATTER |
|---|---|

G05D1/00(2024.01)i; G06V20/17(2022.01)i; G06V10/46(2022.01)i; G06V10/75(2022.01)i

According to International Patent Classification (IPC) or to both national classification and IPC

| B. | FIELDS SEARCHED |
|---|---|

Minimum documentation searched (classification system followed by classification symbols)

IPC:G05D1 G06Q10 G06V10 G06V20

Documentation searched other than minimum documentation to the extent that such documents are included in the fields searched

Electronic data base consulted during the international search (name of data base and, where practicable, search terms used)

CNTXT, CNKI, ENTXT, WPABS: 仓储, 仓库, 库房, 对极几何, 飞机, 飞行器, 无人车, 无人机, 路径, 数字孪生, 孪生模型, 盘查, 盘点, 盘库, 清点, 偏差, 偏移, 图片, 图像, 照片, 位置, 相似度, 虚拟, 巡查, 巡察, 巡航, 巡检, aircraft, airplane, plane, uav, image, picture, warehouse, digital twin?, similar+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116339389 A (RIAMB (BEIJING) TECHNOLOGY DEVELOPMENT CO., LTD.) 27 June 2023 (2023-06-27)<br>description, paragraphs [0020]-[0028], and figures 1-4 | 1-8 |
| A | CN 115952936 A (DATANG INTERNET TECHNOLOGY (WUHAN) CO., LTD. et al.) 11 April 2023 (2023-04-11)<br>description, paragraphs [0042]-[0090], and figures 1 and 2 | 1-8 |
| A | US 2022035341 A1 (STRONG FORCE VCN PORTFOLIO 2019, LLC) 03 February 2022 (2022-02-03)<br>entire document | 1-8 |
| A | CN 110303500 A (CITIC PHOENIX HARBOR SUPPLY CHAIN MANAGEMENT CO., LTD.) 08 October 2019 (2019-10-08)<br>entire document | 1-8 |
| A | CN 115630902 A (SHANDONG JEREI DIGITAL TECHNOLOGY CO., LTD.) 20 January 2023 (2023-01-20)<br>entire document | 1-8 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 April 2024** | **14 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 722 837 A1

**INTERNATIONAL SEARCH REPORT**

| International application No. |
| --- |
| **PCT/CN2024/080202** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022299995 A1 (VIMAAN ROBOTICS, INC.) 22 September 2022 (2022-09-22) entire document | 1-8 |
| A | CN 112189208 A (4STEC INC.) 05 January 2021 (2021-01-05) entire document | 1-8 |

Form PCT/ISA/210 (second sheet) (July 2022)

## INTERNATIONAL SEARCH REPORT
### Information on patent family members

| International application No. |
|---|
| **PCT/CN2024/080202** |

| Patent document cited in search report | | | Publication date (day/month/year) | Patent family member(s) | Publication date (day/month/year) |
|---|---|---|---|---|---|
| CN | 116339389 | A | 27 June 2023 | None | |
| CN | 115952936 | A | 11 April 2023 | None | |
| US | 2022035341 | A1 | 03 February 2022 | None | |
| CN | 110303500 | A | 08 October 2019 | None | |
| CN | 115630902 | A | 20 January 2023 | None | |
| US | 2022299995 | A1 | 22 September 2022 | None | |
| CN | 112189208 | A | 05 January 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202110687757 A
- WO 202010213428 X
- WO 202210344350 A
- WO 202010513538 A
- WO 202010213428 A